# EUROPÄISCHE PATENTSCHRIFT

(11) **EP 2 524 407 B1**
(45) Veröffentlichungstag und Bekanntmachung des Hinweises auf die Patenterteilung: **06.01.2016**
(21) Anmeldenummer: 11700259.2
(22) Anmeldetag: 12.01.2011
(51) Int. Cl.: H01M 2/20, H01M 10/052

(54) **BATTERIE, BATTERIESYSTEM UND VERFAHREN ZUR VERBINDUNG EINER MEHRZAHL VON BATTERIEN**
BATTERY, BATTERY SYSTEM AND METHOD FOR CONNECTING A PLURALITY OF BATTERIES
BATTERIE, SYSTÈME DE BATTERIES ET PROCÉDÉ DE CONNEXION D'UNE PLURALITÉ DE BATTERIES

(30) Priorität: 13.01.2010 DE 102010000842
(43) Veröffentlichungstag der Anmeldung: 21.11.2012
(73) Patentinhaber: Samsung SDI Co., Ltd., Gyeonggi-do (KR); Robert Bosch GmbH, 70442 Stuttgart (DE)
(72) Erfinder: GLESS, Michael, 70435 Stuttgart-Zuffenhausen (DE); ANGERBAUER, Ralf, 71696 Möglingen (DE)
(74) Vertreter: Bee, Joachim
(86) Internationale Anmeldenummer: PCT/EP2011/050315
(87) Internationale Veröffentlichungsnummer: WO 2011/086086

(56) Entgegenhaltungen:
- WO-A1-2008/144994
- DE-C- 515 051
- JP-A- 2005 190 885
- US-A1- 2009 208 836

## Beschreibung

Die vorliegende Erfindung betrifft eine Batterie mit einem Batteriekörper und wenigstens einem aus einer Außenfläche des Batteriekörpers herausragenden Terminal, welches elektrisch leitfähig mit einem der Batteriepole verbunden ist.

Die Erfindung betrifft ebenfalls ein Batteriesystem mit wenigstens zwei miteinander elektrisch verbundenen Batterien, von denen wenigstens eine Batterie erfindungsgemäß ausgestaltet ist.

Außerdem betrifft die vorliegende Erfindung ein Verfahren zur elektrischen Verbindung einer Mehrzahl von Batterien, von denen wenigstens eine Batterie gemäß der Erfindung ausgestaltet ist.

Ergänzt wird die Erfindung durch ein Kraftfahrzeug, welches wenigstens eine erfindungsgemäße Batterie und/oder ein erfindungsgemäßes Batteriesystem umfasst.

### Stand der Technik

Eine Batterie, die eine oder mehrere galvanische Zellen umfasst, dient als elektrochemischer Energiespeicher und Energiewandler. Bei der Entladung der Batterie bzw. der jeweiligen Batteriezelle wird in der Batterie gespeicherte chemische Energie durch eine elektrochemische Redoxreaktion in elektrische Energie umgewandelt. Diese elektrische Energie kann somit je nach Bedarf von einem Nutzer angefordert werden. Die Kathode der Batterie bzw. das an der Kathodenseite angeordnete Terminal besteht dabei für gewöhnlich aus Aluminium oder einer Aluminiumlegierung und die Anode bzw. das an der Anodenseite der Batterie angeordnete Terminal besteht üblicherweise aus Kupfer oder einer Kupferlegierung.

Eine elektrisch leitfähige Verbindung von mehreren Batterien wird üblicherweise durch einen angeschraubten Verbinder realisiert, der allerdings aufgrund seiner großen Anzahl von Einzelteilen einen relativ hohen Übergangswiderstand aufweist. Bedingt durch Korrosion, insbesondere Oxidation, und aufgrund von elektrochemischen Spannungspotenzial-Unterschieden kommt es insbesondere bei verschraubten Verbindern über die Lebensdauer zu einer weiteren Erhöhung des Übergangswiderstandes.

Ein weiterer Nachteil des aus mehreren Teilen bestehenden Verbinders sind die hohen Fertigungs- und Montagekosten, bedingt durch eine Mehrzahl von Fertigungsschritten zur Herstellung der Einzelteile des Verbinders sowie der Montageschritte zum Zusammensetzen und zur Montage des Verbinders an den jeweiligen Batteriezellen.

Die DE 102 45 384 A1 offenbart einen Batteriesteckkontakt, bei dem ein Kabel mit einem Stecker versehen ist, und der Stecker in einer Buchse am Batterieterminal anschließbar ist. Es ist dadurch eine einfache Kontaktierung der Batterie möglich. Allerdings ist ein relativ hoher Fertigungsaufwand zur Herstellung des Steckers am Kabel und für die Buchse am Terminal erforderlich. Dies bewirkt insbesondere bei Großserienfertigung einen eklatanten Kostenanstieg. Das heißt, dass fest an Polen beziehungsweise Terminals von Batterien angeordnete Einrichtungen zur Kontaktierung entweder konstruktiv aufwändig ausgestaltet sind, um die Kontaktierung von weiteren Anschlüssen, wie zum Beispiel weiteren Terminals von anderen Batterien, unabhängig von der Position der anderen Batterie zu ermöglichen. Eine andere Möglichkeit ist der Einsatz eines flexiblen Verbinders, wobei jedoch der Montageaufwand zur Anbringung dieses flexiblen Verbinders relativ hoch ist.

Die DE 515 051 C offenbart Verbindungskontakte elektrischer Elemente einer Batterie, die bei entsprechender Anordnung mehrerer Batterien an ihren Terminals kontaktieren und somit parallel oder in Reihe schalten können. Zur Realisierung der jeweiligen Schaltung sind die Verbindungskontakte auf einem Träger fest anzuordnen und entsprechend zu positionieren.

Die JP 2005/190885 A offenbart ein Batteriemodul, wobei jede Batterie einen abstehenden Abschnitt aufweist, von dem sich seitliche Auskragungen erstrecken. Dadurch lassen sich in einfacher Weise benachbarte Batterien kontaktieren und derart miteinander verschalten.

Die US 2009/208836 A1 lehrt eine Batterie mit integral angeordnetem Terminal, wobei dieses integral angeordnete Terminal derart ausgestaltet ist, dass es einen Pol einer benachbarten Batterie kontaktiert, um derart eine Reihenschaltung auszubilden.

Die WO 2008/144994 A1 offenbart ein Batteriemodul, bei welchem an den einzelnen Terminals einzelner Batteriezellen Verbindungselemente angeschlossen sind, die einander in einfacher Weise elektrisch leitfähig kontaktieren können.

Der geschilderte Stand der Technik weist somit die Nachteile auf, dass er entweder in einfacher und kostengünstiger Ausgestaltung einen relativ hohen Montageaufwand bedingt oder zur Verminderung des Montageaufwandes derart konzipiert ist, dass eine einfache und schnelle Befestigung von Verbindern möglich ist, wobei jedoch die einzelnen Terminals beziehungsweise die zur Verbindung vorgesehenen Anschlussstellen konstruktiv aufwändig gestaltet sind.

### Offenbarung der Erfindung

Erfindungsgemäß wird eine Batterie zur Verfügung gestellt, die einen Batteriekörper und wenigstens ein aus einer Außenfläche des Batteriekörpers herausragendes Terminal umfasst, welches elektrisch leitfähig mit einem der Batteriepole verbunden ist. Die Batterie weist dabei wenigstens eine elektrisch leitfähige Biegelasche auf, die elektrisch leitfähig über das Terminal mit dem Batteriepol verbunden ist, wobei die Biegelasche eine Länge L aufweist, die größer ist als ein Abstand A der Längsachse des Terminals von der Stelle der Durchdringung durch die Außenfläche bis zu einem seitlichen Rand der Außenfläche. Die Biegelasche weist einen Bereich des verringerten Biegequerschnitts auf wobei der querschnittsgeschwächle Bereich so bemesen ist, dass er eine aus veichend elektrische Leitung gewährleistet.

Ein Effekt der Erfindung besteht darin, dass das freie Ende der Biegelasche bei einer Biegung in einem Winkel von im Wesentlichen 90° zur Terminal-Längsachse über den Rand der Außenfläche hinausragt, insofern die Biegung der Biegelasche dicht an der Außenfläche erfolgt. Hinausragen heißt im Sinne der Erfindung, dass das freie Ende der Biegelasche aus einem Bereich der Projektion der Außenfläche in Richtung der Terminal-Längsachse herausreicht. Dabei ist die Erfindung insbesondere auf prismatische Batterien bezogen, bei denen das Terminal aus einer oberen Außenfläche der Batterie herausragt, und die Batterien aneinander zu Batteriesystemen stapelweise angeordnet und in dieser Andordung miteinander zu verbinden sind. Der Rand, über den die Biegelasche hinausragt, ist dabei der der benachbarten Batterie zugewandte Rand. Dies ist üblicherweise ein oberer Begrenzungsrand einer Seitenfläche, die wesentlich größer ist als die obere Außenfläche.

### Vorteile der Erfindung

Bevorzugt ist dabei die Länge der Biegelasche derart bemessen, dass die umgebogene Biegelasche bis zur Mitte der benachbarten Batterie reicht, um dort mit dem Terminal der benachbarten Batterie verbunden zu werden. Zwecks manueller oder automatisierter Umbiegung mit einem geringen energetischen Einsatz ist vorgesehen, dass das Material der Biegelasche leicht plastisch verformbar ist. Es sollte bevorzugt zumindest im Biegebereich eine Streckgrenze von maximal 100 N/mm² aufweisen. Das heißt, dass die Biegelasche zumindest im Biegebereich eine Streckgrenze aufweisen sollte, die maximal so groß ist wie die einer geeigneten Kupfer- oder Aluminiumlegierung. Selbstverständlich ist das Material der Biegelasche derart auszuwählen, dass es eine hohe elektrische Leitfähigkeit aufweist.

Der Vorteil der Erfindung liegt darin, dass die an einem Terminal einer Batterie befestigte Biegelasche, oder eine als integraler Bestandteil eines Terminals ausgestaltete Biegelasche, in einfacher Weise manuell oder automatisiert in Richtung einer zu kontaktierenden benachbarten Batterie oder auch eines Kontaktes eines Verbrauchers oder Generators umgebogen werden kann, um dort kraft-, stoff- und/oder formschlüssig befestigt zu werden.

Es ist in dieser Ausgestaltung lediglich ein Verbindungsvorgang zur Herstellung eines elektrisch leitfähigen Kontaktes, nämlich am Terminal der benachbarten Batterie, notwendig. Durch die relativ flexible Umbiegung des Terminals können geringe Positionsungenauigkeiten der Batterien ausgeglichen werden. Neben dem Vorteil des sehr einfachen Anschlusses beziehungsweise Kontaktierung von mehreren Batterien ist außerdem eine hervorragende elektrische Kontaktierung zwischen Terminal und Biegelasche gewährleistet, verbunden mit geringen Übergangswiderständen und einer hohen Lebenserwartung. Es lässt sich durch die flexible Biegung in einfacher Weise die Verbindung der Batterien herstellen, insbesondere bei einheitlichem Batterie-Design und abwechselnder Ausrichtung der Biegelasche, um im Stapel nebeneinander angeordnete Batterien einfacher in Reihe schalten zu können. Die Batterien können dabei eine oder mehrere Batteriezellen aufweisen. Mit einer Batterie im Sinne der Erfindung ist somit auch eine einzelne Batteriezelle gemeint, die durch äußere Verbindung ihrer Terminals als Bestandteil einer Batterie oder eines Batteriezellensystems fungieren kann.

Mit dem Bereich des verringerten Biegequerschnitts ist eine Stelle der bevorzugten Biegung definiert, welche ein geringeres Flächenträgheitsmoment aufweist als angrenzende Bereiche und demzufolge bei Einleitung eines Drehmomentes in die Biegelasche zu einer Verformung in diesem querschnittsgeschwächten Bereich führt. Erfindungsgemäss ist der querschnittsgeschwächte Bereich selbstverständlich noch so groß, dass er eine ausreichende elektrische Leitung gewährleistet.

Die erfindungsgemäße Batterie kann insbesondere eine Lithium-Ionen-Batterie beziehungsweise eine Lithium-Ionen-Batteriezelle sein.

Die erfindungsgemäße Batterie kann derart ausgestaltet sein, dass sie ein Anschlusselement umfasst, dessen Bestandteile die Biegelasche, das Terminal und der Batteriepol sind. Das heißt, dass die Biegelasche, das Terminal und der Batteriepol jeweils integrale Bestandteile eines Gesamtbauteils, nämlich des Anschlusselementes sind. Diese konstruktive Ausgestaltung ermöglicht eine einfache Herstellung des Terminals, der Biegelasche und des Batteriepols. Bevorzugt ist das Anschlusselement dabei am Minus-Pol angeordnet und somit zumindest teilweise aus Kupfer oder einer geeigneten Kupferlegierung ausgeführt.

In alternativer Ausgestaltung ist vorgesehen, dass die Batterie ein Anschlusselement umfasst, dessen Bestandteile der Batteriepol und/oder das Terminal ist und die Biegelasche an das Terminal elektrisch leitfähig angeschlossen ist. Das heißt, dass zum Beispiel an einem Batteriepol ein extra Terminal befestigt sein kann, an dem wiederum, bevorzugt außerhalb des Batteriekörpers, sich die Biegelasche anschließt. Eine solche Ausführungsform kann hinsichtlich Fertigungsaufwand und Kosten technologische Vorteile aufweisen. Dabei müssen nicht unbedingt die drei Bauteile Batteriepol, Terminal und Biegelasche als Einzelteile vorliegen, sondern der Batteriepol kann gegebenenfalls auf das Terminal integral umfassen, an welchem die Biegelasche als extra Bauteil kraft-, form- und/oder stoffschlüssig angeschlossen ist.

Eine Dichtung zwischen Terminal und Batteriekörper beziehungsweise der Außenfläche der Batterie kann bevorzugterweise derart ausgestaltet sein, dass sie zumindest in der Ebene der vorgesehenen Biegung eine feste Einspannung für die Biegelasche darstellt. Alternativ kann vorgesehen sein, dass zusätzlich zur Dichtung eine feste Einspannung des Terminals am Batteriegehäuse angeordnet ist. Mit der festen Einspannung ist dabei ein typisches mechanisches Bauelement gemeint, welches unter anderem durch die Möglichkeit der Aufnahme von Biegemomenten gekennzeichnet ist. Dadurch lässt sich ein Biegemoment in die Biegelasche einleiten, ohne dass dieses auf dem Batteriepol im Inneren der Batterie übertragen wird.

Erfindungsgemäß wird außerdem ein Batteriesystem mit wenigstens zwei Batterien zur Verfügung gestellt, bei dem wenigstens eine erste Batterie gemäß einer erfindungsgemäßen Batterie ausgestaltet ist, wobei die Biegelasche der ersten Batterie bis über den einer zweiten Batterie zugewandten Rand der Fläche gebogen ist, aus der das Terminal herausragt, und das freie Ende der Biegelasche mit einem Terminal der zweiten Batterie elektrisch leitfähig verbunden ist. Im Sinne der Erfindung bedeutet dies allerdings nicht, dass der Biegebereich des Terminals der ersten Batterie bis über den Rand der ersten Batterie herüberreicht, sondern nur, dass eine sich in Richtung des Terminals an dieses anschließende Biegelasche auf Grund einer Biegung, vorzugsweise in einem Winkel von 90°, mit seinem freien Ende aus dem Projektionsbereich der Außenfläche, aus der das Terminal der ersten Batterie herausragt, herausreicht. Vorzugsweise ist dabei vorgesehen, dass das Terminal der zweiten Batterie, welches mit der Biegelasche der ersten Batterie elektrisch-leitfähig verbunden ist, im Bereich der elektrischen Kontaktierung zumindest abschnittsweise komplementär zur Form der Biegelasche ausgeführt ist. Es lässt sich somit eine formschlüssige Aufnahme der Batterielasche im beziehungsweise am Terminal der zweiten Batterie realisieren und somit eine elektrische Kontaktierung über die Lebensdauer verbessern.

In einer alternativen Ausführungsform ist vorgesehen, dass die zweite Batterie ebenfalls gemäß einer erfindungsgemäßen Batterie ausgestaltet ist und die beiden Biegelaschen der beiden Batterien miteinander kraft-, form- und/oder stoffschlüssig miteinander verbunden sind. Das heißt, dass in diesem Fall ein Terminal der zweiten Batterie ebenfalls mit einer Biegelasche versehen ist und die beiden Biegelaschen der beiden Batterien miteinander verbunden sind.

Bevorzugterweise ist bei einer ersten Batterie, bei der die Biegelasche als extra Bauteil an das Terminal angeschlossen ist, vorgesehen, dass die Biegelasche der ersten Batterie zumindest im Bereich der Kontaktierung mit dem Terminal der zweiten Batterie aus dem gleichen Material wie das Terminal der zweiten Batterie besteht. Es bietet sich dabei an, als Material der Beigelasche Kupfer beziehungsweise eine geeignete Kupferlegierung zu verwenden, um damit eine bessere Verschweißung von Terminal und Biegelasche zu ermöglichen.

Es wird erfindungsgemäß außerdem ein Verfahren zur elektrischen Verbindung einer Mehrzahl von Batterien zur Verfügung gestellt, von denen wenigstens eine erste Batterie erfindungsgemäß ausgestaltet ist, wobei die Biegelasche dieser ersten Batterie umgebogen wird und mit einem Terminal einer zweiten Batterie elektrisch-leitfähig verbunden wird. Dabei ist, wie bereits beschrieben, bevorzugt eine unmittelbare Verbindung von Biegelasche und Terminal der zweiten Batterie vorgesehen. Der Vorteil des erfindungsgemäßen Verfahrens liegt insbesondere darin, dass nach erfolgter Positionierung und Fixierung der Batterien sich die Biegelasche an der ersten Batterie in einfacher Weise zum Terminal der zweiten Batterie umbiegen lässt und an diesem befestigen lässt. Durch die Auswahl eines Werkstoffes mit einer geringen Streckgrenze, wie zum Beispiel Aluminium oder Kupfer oder einer geeigneten Legierung daraus, ist mit nur einer geringen Rückfederung der Biegelasche zu rechnen, so dass sie im Wesentlichen den durch Kraft- oder Momenteinwirkung eingestellten Biegewinkel behalten wird und in diesem am Terminal befestigt werden kann.

Das erfindungsgemäße Verfahren ist dadurch vorteilhaft ausgestaltet, dass die Biegelasche mit dem Terminal der zweiten Batterie form-, kraft- und/oder stoffschlüssig verbunden wird. Insbesondere kann die Biegelasche zwischen zwei Schenkeln eines U-Profils des Terminals an der zweiten Batterie eingeklemmt werden, so dass sich eine kraftschlüssige Verbindung mittels Presspassung ausbildet. In weiterer besonderer Ausgestaltung können die beiden Schenkel des U-Profils mittels einer Schraubverbindung in Richtung des jeweils anderen Schenkels gezogen werden, so dass die Klemmwirkung noch vergrößert wird und gleichzeitig eine formschlüssige Aufnahme der Biegelasche im U-Profil des Terminals realisiert wird. Eine stoffschlüssige Verbindung lässt sich durch Schweißen, insbesondere Laserschweißen, realisieren, welches alternativ oder ergänzend zur kraft- und/oder formschlüssigen Verbindung Anwendung finden kann. Ergänzt wird die Erfindung durch ein Kraftfahrzeug, insbesondere ein Elektrofahrzeug oder ein Hybridfahrzeug, welches wenigstens eine erfindungsgemäße Batterie und/oder ein erfindungsgemäßes Batteriesystem umfasst.

### Zeichnungen

Ausführungsbeispiele der Erfindung werden anhand der Zeichnungen und der nachfolgenden Beschreibung näher erläutert.

Es zeigen:
- Figur 1:: eine erfindungsgemäße Batterie in Ansicht von der Seite,
- Figur 2:: ein Batteriesystem mit zwei in Reihe geschalteten Batterien.

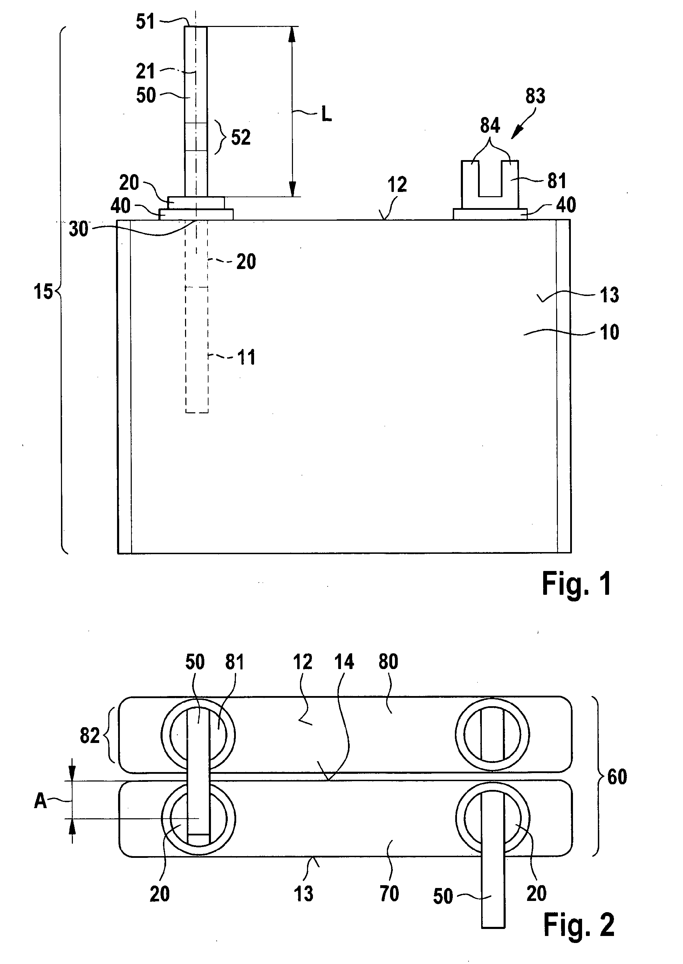

Zunächst wird die erfindungsgemäße Batterie 10, wie in Figur 1 dargestellt, beschrieben. Die Batterie 10 umfasst einen gestrichelt angedeuteten Batteriepol 11, der im Körper der Batterie 10 angeordnet ist. An den Batteriepol 11 schließt sich das Terminal 20 an, welches, wie in Figur 1 dargestellt, in einem geringen Maß aus dem Batteriekörper herausragt. Dabei ist die vorliegende Erfindung nicht auf ein Terminal 20 eingeschränkt, welches aus der Batterie 10 herausragt, sondern es kann auch vorgesehen sein, dass das Terminal 20 ebenfalls vollständig im Batteriekörper angeordnet ist. In Richtung der Längsachse 21 des Terminals 20 schließt sich erfindungsgemäß die Biegelasche 50 an. Die Batterie 10 kann dabei derart ausgestaltet sein, dass der Batteriepol 11, das Terminal 20 sowie die Biegelasche 50 alle integrale Bestandteile eines Anschlusselementes 15 sind. Dieses Anschlusselement 15 kann ein durchgängiges Bauteil sein, welches in der Batterie 10 den Batteriepol 11 zur Verfügung stellt, am Übergang zur Außenseite das Terminal 20 darstellt und dessen aus der Batterie 10 herausragender Bereich als Biegelasche 50 ausgestaltet ist. Das heißt, dass sich an ein vollständig im Batteriekörper angeordnetes Terminal 20 die Biegelasche 50 anschließt, welche aus dem Batteriekörper herausragt.

Das dargestellte Terminal 20 führt an der Stelle der Durchdringung 30 durch die obere Außenfläche 12 der Batterie 10. Bevorzugt ist zwischen dem Terminal 20 und der oberen Außenfläche 12 eine Dichtung 40 angeordnet. Das freie Ende 51 der Biegelasche 50 weist somit von der oberen Außenfläche 12 der Batterie 10 weg. Zwecks Realisierung einer einfachen Umbiegung der Biegelasche weist diese erfindungsgemäss einen Bereich des verringerten Biegequerschnitts 52 auf, der relativ dicht am Übergang zum Terminal 20 beziehungsweise an der oberen Außenfläche 12 angeordnet ist.

Bei Umbiegung der Biegelasche 50 lässt sich diese, wie in Figur 2 dargestellt, in einfacher Weise mit dem Terminal 81 einer zweiten Batterie 80 verbinden. Die Umbiegung erfolgt somit um eine Biegeachse, die im Wesentlichen senkrecht zur Längsachse 21 des Terminals verläuft. Durch die umgebogene Biegelasche 50 ist somit eine erste Batterie 70 mit einer zweiten Batterie 80 zu einem Batteriesystem 60 verbunden. Es ist ersichtlich, dass die Länge L der Biegelasche 15 ausreichend lang ist, um über den Abstand A zwischen der Stelle der Durchdringung 30 und einem seitlichen Rand der Außenfläche 14 über diesen hinauszuragen und mit dem Terminal der zweiten Batterie 81 kontaktiert zu werden. Der seitliche Rand der Außenfläche15 ist dabei bei prismatischen Batterien 10 auch der obere Rand der Seitenfläche 13, wie sie in Figur 1 zu sehen ist.

Die erste Batterie 70 in Figur 2 weist dabei an beiden Terminals Biegelaschen auf, die in jeweils unterschiedliche Richtungen gebogen sind. Es lässt sich somit der gezeigte Anschluss der zweiten Batterie 80 realisieren, und am anderen Terminal 20 der Anschluss einer weiteren, in Reihe zu schaltenden, nicht dargestellten Batterie.

Zur Verbesserung des elektrischen Kontaktes ist das Terminal der zweiten Batterie 81 gemäß des in Figur 1 dargestellten Terminals 81 ausgeführt, wobei jedoch die in Figur 1 dargestellte Batterie 10 nicht auf die Anordnung der dargestellten Terminals 20 und 81 eingeschränkt ist, sondern auch vorgesehen sein kann, dass das zweite Terminal an der Batterie 10 eine grundsätzlich andere konstruktive Ausgestaltung aufweist.

Wie in Figur 2 ersichtlich ist, weist die zweite Batterie 80 ein Terminal 81 auf, welches bevorzugt gemäß des Terminals 81 in Figur 1 ausgeführt ist. Dieses Terminal 81 umfasst ein U-Profil 83, welches im Wesentlichen aus zwei Schenkeln 84 gebildet ist, und einen Bereich der elektrischen Kontaktierung 82. Die Biegelasche 50 kann somit, wie dargestellt, zwischen die beiden Schenkel 84 eingelegt und/oder durch diese geklemmt werden. Ein sicherer elektrischer Kontakt ist somit gewährleistet. Das heißt, dass zur Herstellung der elektrischen Verbindung der beiden Batterien 70 und 80 die Biegelasche nur umgebogen werden muss und in den Terminal 81 geklemmt werden muss, um eine elektrisch leitfähige Verbindung der beiden Batterien zu erhalten.

Bevorzugt ist zur Erleichterung der Umbiegung vorgesehen, dass die Biegelasche so eine Breite aufweist, die geringer ist als ihre Tiefe, wobei die Breite das Maß ist, welches im Wesentlichen parallel zur Biegeachse zu messen ist und die Tiefe das Maß ist, was im Wesentlichen senkrecht zur Biegeachse zu messen ist.

## Patentansprüche

1. Batterie (10), umfassend einen Batteriekörper und wenigstens ein aus einer Außenfläche (12) der Batteriekörpers herausragendes Terminal (20), welches elektrisch leitfähig mit einem der Batteriepole (11) verbunden ist, wobei die Batterie (10) wenigstens eine elektrisch leitfähige Biegelasche (50) aufweist, die elektrisch leitfähig über das Terminal (20) mit dem Batteriepol (11) verbunden ist, wobei die Biegelasche (50) eine Länge (L) aufweist, die größer ist als ein Abstand (A) der Längsachse (21) des Terminals (20) von der Stelle der Durchdringung (30) durch die Außenfläche (12) bis zu einem seitlichen Rand (14) der Außenfläche, und
**dadurch gekennzeichnet, dass**
die Biegelasche (50) einen Bereich des verringerten Biegequerschnitts (52) aufweist, und wobei der querschnittsgeschwächte Bereich so bemessen ist, dass er eine ausreichende elektrische Leitung gewährleistet.

2. Batterie (10) nach Anspruch 1, die ein Anschlusselement (15) umfasst, dessen Bestandteile die Biegelasche (50), das Terminal (20) und der Batteriepol (11) sind.

3. Batterie (10) nach Anspruch 1, die ein Anschlusselement (15) umfasst, dessen Bestandteile der Batteriepol (11) und/oder das Terminal (20) ist und die Biegelasche (50) an das Terminal (20) elektrisch leitfähig angeschlossen ist.

4. Batteriesystem (60) mit wenigstens zwei elektrisch miteinander verbundenen Batterien, **dadurch gekennzeichnet, dass** wenigstens eine erste Batterie (70) des Batteriesystems (60) gemäß der Batterie (10) nach einem der Ansprüche 1 bis 3 ausgestaltet ist, wobei die Biegelasche (50) der ersten Batterie (70) bis über ihren einer zweiten Batterie (80) zugewandten Rand (14) der Fläche gebogen ist, aus der das Terminal (20) herausragt, und das freie Ende (51) der Biegelasche (50) mit einem Terminal (81) der zweiten Batterie (80) elektrisch leitfähig verbunden ist.

5. Batteriesystem (60) nach Anspruch 4, bei dem das Terminal (81) der zweiten Batterie (80), welches mit der Biegelasche (50) der ersten Batterie (70) elektrisch leitfähig verbunden ist, im Bereich der elektrischen Kontaktierung (82) zumindest abschnittsweise komplementär zur Form der Biegelasche (50) ausgeführt ist.

6. Batteriesystem (60) nach einem der Ansprüche 4 oder 5, bei dem die erste Batterie (70) eine Batterie (10) gemäß Anspruch 3 ist, wobei die Biegelasche (50) der ersten Batterie (70) zumindest im Bereich der elektrischen Kontaktierung (82) mit dem Terminal (81) der zweiten Batterie (80) aus dem gleichen Material wie das Terminal (81) der zweiten Batterie (80) besteht.

7. Verfahren zur elektrischen Verbindung einer Mehrzahl von Batterien, von denen wenigstens eine erste Batterie (70) gemäß der Batterie (10) nach einem der Ansprüche 1 bis 3 ausgestaltet ist, wobei die Biegelasche (50) dieser ersten Batterie (70) umgebogen wird und mit einem Terminal (81) einer zweiten Batterie (80) elektrisch leitfähig verbunden wird.

8. Verfahren zur elektrischen Verbindung einer Mehrzahl von Batterien nach Anspruch 7, bei dem die Biegelasche (50) mit dem Terminal (81) der zweiten Batterie (80) form- und/oder kraft- und/oder stoffschlüssig verbunden wird.

9. Kraftfahrzeug, umfassend mindestens eine Batterie nach wenigstens einem der Ansprüche 1 bis 3 und/oder mindestens ein Batteriesystem nach wenigstens einem der Ansprüche 4 bis 6.

## Claims

1. Battery (10), comprising a battery body and at least one terminal (20) which protrudes from an outside surface (12) of the battery body and is electrically conductively connected to one of the battery poles (11), wherein the battery (10) has at least one electrically conductive bending lug (50) which is electrically conductively connected to the battery pole (11) via the terminal (20), and wherein the bending lug (50) has a length (L) which is greater than a distance (A) between the longitudinal axis (21) of the terminal (20) and the location (30) where it passes through the outside surface (12) as far as a lateral edge (14) of the outside surface, **characterized in that** the bending lug (50) has a region with a reduced bending cross section (52), and wherein the region of the weakened cross section is dimensioned such that it ensures sufficient electrical conduction.

2. Battery (10) according to Claim 1, which comprises a connecting element (15) whose components are the bending lug (50), the terminal (20) and the battery pole (11).

3. Battery (10) according to Claim 1, which comprises a connecting element (15) whose components are the battery pole (11) and/or the terminal (20), and the bending lug (50) is electrically conductively connected to the terminal (20).

4. Battery system (60) having at least two batteries which are electrically connected to one another, **characterized in that** at least a first battery (70) of the battery system (60) is configured according to the battery (10) according to one of Claims 1 to 3, wherein the bending lug (50) of the first battery (70) is bent as far as over its edge (14) facing a second battery (80), of the surface from which the terminal (20) protrudes, and the free end (51) of the bending lug (50) is electrically conductively connected to a terminal (81) of the second battery (80).

5. Battery system (60) according to Claim 4, in which the terminal (81) of the second battery (80) which is electrically conductively connected to the bending lug (50) of the first battery (70) is embodied in the region of the electrical contact (82) in a way which is at least in part complementary to the shape of the bending lug (50).

6. Battery system (60) according to one of Claims 4 and 5, in which the first battery (70) is a battery (10) according to Claim 3, wherein the bending lug (50) of the first battery (70) is composed of the same material as the terminal (81) of the second battery (80) at least in the region of the electrical contact (82) with the terminal (81) of the second battery (80).

7. Method for electrically connecting a multiplicity of batteries, at least a first battery (70) of which is configured according to the battery (10) according to one of Claims 1 to 3, wherein the bending lug (50) of this first battery (70) is bent over and is electrically conductively connected to a terminal (81) of a second battery (80).

8. Method for electrically connecting a multiplicity of batteries according to Claim 7, in which the bending lug (50) is connected in a positively locking and/or frictionally locking and/or materially joined fashion to the terminal (81) of the second battery (80).

9. Motor vehicle, comprising at least one battery according to at least one of Claims 1 to 3 and/or at least one battery system according to at least one of Claims 4 to 6.

## Revendications

1. Batterie (10) comprenant un corps de batterie et au moins une borne (20) débordant d'une surface extérieure (12) du corps de batterie et raccordée de manière électriquement conductrice à l'un des pôles (11) de la batterie,
la batterie (10) présentant au moins une patte flexible (50) électriquement conductrice raccordée de manière électriquement conductrice au pôle (11) de la batterie par l'intermédiaire de la borne (20),
la patte flexible (50) présentant une longueur (L) supérieure à la distance (A) entre l'axe longitudinal (21) de la borne (20) et l'emplacement de la traversée (30) de la surface extérieure (12) jusqu'à un bord latéral (14) de la surface extérieure,
**caractérisée en ce que**
la patte flexible (50) présente une partie de section transversale flexible (52) réduite et
**en ce que** la partie de section transversale flexible réduite est dimensionnée de manière à former un conducteur électrique suffisant.

2. Batterie (10) selon la revendication 1, qui comporte un élément de raccordement (15) dont les composants sont la patte flexible (50), la borne (20) et le pôle (11) de la batterie.

3. Batterie (10) selon la revendication 1, qui comporte un élément de raccordement (15) dont les composants sont le pôle (11) de la batterie et/ou la borne (20), la patte flexible (50) étant raccordée de manière électriquement conductrice à la borne (20).

4. Système (60) de batterie présentant au moins deux batteries raccordées électriquement l'une à l'autre, **caractérisé en ce que**
au moins une première batterie (70) du système (60) de batteries est configurée comme batterie (10) selon l'une des revendications 1 à 3,
**en ce que** la patte flexible (50) de la première batterie (70) étant fléchie jusqu'au-dessus du bord (14), tourné vers une deuxième batterie (80), de la surface de laquelle la borne (20) déborde et
**en ce que** l'extrémité libre (51) de la patte flexible (50) est reliée de manière électriquement conductrice à une borne (81) de la deuxième batterie (80).

5. Système (60) de batterie selon la revendication 4, dans lequel la borne (81) de la deuxième batterie (80) raccordée électriquement à la patte flexible (50) de la première batterie (70) présente au moins certaines parties de forme complémentaire de celle de la patte flexible (50) au niveau du contact électrique (82).

6. Système (60) de batterie selon l'une des revendications 4 ou 5, dans lequel la première batterie (70) est une batterie selon la revendication 3, dans lequel la patte flexible (50) de la première batterie (70) est constituée du même matériau que la borne (81) de la deuxième batterie (80) au moins au niveau du contact électrique (82) avec la borne (81) de la deuxième batterie (80).

7. Procédé pour raccorder électriquement plusieurs batteries parmi lesquelles au moins une première batterie (70) est configurée comme batterie (10) selon l'une des revendications 1 à 3,
la patte flexible (50) de cette première batterie (70) n'étant pas fléchie et étant raccordée de manière électriquement conductrice à une borne (81) d'une deuxième batterie (80).

8. Procédé pour raccorder électriquement plusieurs batteries selon la revendication 7, dans lequel la patte flexible (50) est raccordée à la borne (81) de la deuxième batterie (80) en correspondance géométrique, en correspondance mécanique et/ou en correspondance de matière.

9. Véhicule automobile comprenant au moins une batterie configurée comme batterie selon au moins l'une des revendications 1 à 3 et/ou au moins un système de batteries selon au moins l'une des revendications 4 à 6.
